# EUROPEAN PATENT SPECIFICATION

(11) **EP 3 053 431 B1**
(45) Date of publication and mention of the grant of the patent: **03.11.2021**
(21) Application number: 15397503.2
(22) Date of filing: 06.02.2015
(51) Int. Cl.: B62D 33/02, A01G 23/00

(54) **Log sorting mechanism**
Baumstämmesortierungsmechanismus
Mécanisme de tri de grumes

(43) Date of publication of application: 10.08.2016
(73) Proprietor: John Deere Forestry Oy, 33100 Tampere (FI)
(72) Inventor: Karhunsaari, Matti, 37500 Lempäälä (FI)
(74) Representative: Berggren Oy

(56) References cited:
- US-A- 3 623 521
- US-A- 4 148 526
- "Moipu Sorter 2014", , 22 October 2014 (2014-10-22), XP054976006, Retrieved from the Internet: URL:https://www.youtube.com/watch?v=EP6DBA xF8uY [retrieved on 2015-08-03]
- None

## Description

### Field of the Invention

The invention relates to a log sorting mechanism.

### Background of the Invention

The load space of forwarders or forest trailers used for transporting logs from the forest to the collecting sites are normally loaded such that logs taken from the same cutting area are placed in to the same cargo regardless of the type of the log (i.e. length, diameter and tree). This minimizes the number of forwarding trips required to transfer the logs. However, logs of different types have often different destination and hence unloading takes place such that different types of logs are unloaded in different locations. This causes that logs have to be sorted during the unloading if the trunks have not been loaded such that different types of logs have been situated in different locations in the load space. Such sorting takes time and reduces the efficiency of the work. In order to improve efficiency during the unloading log sorting mechanisms (or log sorters) which allow the operator to load the different types of logs in to different locations in to the load space have been developed.

Typically, a known log sorting mechanism comprises a lever that has been pivotally attached (fixedly or detachably) to a bunk of a load space such that it can be turned into an "on" position or an "off' position i.e. rotated in a position wherein the lever forms an upwardly directing divider that divides the load space in partitions in which each type of logs can be organized, and in a position wherein the lever lays along the side of the bunk so that such partitions are not formed. At the moment, two types of log sorting mechanisms exist; those that have been fixedly attached (usually by welding) to the bunks, and those that are detachably attached to the bunks by using some kind of mounting or clamping device. The former are usually those that users made themselves and the latter are those that are typically factory-made and sold on the market. A drawback of the former type is that such assemblies may weaken and/or damage the bunks due to possible (careless) machining prior to assembly and due to local heat treatment caused by welding during the phase when such a log sorting mechanism is attached fixedly to the bunk. The latter type of known bunks has been considered expensive as well as too weak and difficult to fit on the standard bunks having different outer dimensions.

A known log shorting mechanism being mounted to the bunks by using some kind of mounting or clamping device and wherein the lever has been mounted on the side of a bunk is shown in the video media "Moipu Sorter 2014", published the 22 October 2014 on the internet (retrieved from the Internet: URL:https://www.youtube.com/watch?v=EP6DBAxF8uY).

### Summary of the Invention

The object of the invention is to provide a novel log sorting mechanism which does not weaken or damage the bunks and which is strong and durable as well as can be detachably attached to bunks.

The object of the invention is reached by the log sorting mechanism according to claim 1 because it comprises a part structure providing a space which can receive a bunk and which serves an attachment structure for the lever wherein the lever is attached between its end to the part structure such that at least one end is located in overlapping arrangement with said space which causes that the lever can rest directly and without torsion moments on the bunk. Furthermore the lever is at least partly mechanically protected by the part structure and can be articulated on the part structure such that it's both sides are supported by the part structure which makes the attachment stronger than e.g. a type attachment wherein the lever is articulated on to a side of a bunk. The log sorting mechanism can be also firmly attached to a bunk by means of clamping mechanism attaching it to a bunk placed in to the space between the part structure because then a bunk or part of a bunk is left in between the structural elements of the part structure around the space. Furthermore, such attachment is easy to implement such that the log sorting mechanism can be attached to bunks of different dimensions by providing such part structure wherein the size of the space is adjustable.

The advantage of the log sorting mechanism according to present invention is that it is durable and strong, does not weaken or damage the bunks and the same log sorting mechanism can be used with bunks, potentially having different dimensions. Furthermore, such log sorting mechanism is simple in structure and inexpensive to manufacture as well as cost-effective for the users.

### Description of the Drawings

Next several embodiments of a log sorting mechanism will be described in more detail by referring to attached drawings wherein:
Figure 1 shows a side view of a forwarder with a load space including bunks for holding the logs in the load space,
Figure 2 shows a front view of a pair of the bunks of the forwarder according to figure 1 wherein on each side of the load space a log sorting mechanism according to a first embodiment has been attached,
Figure 3 shows an exploded view of the log sorting mechanism shown in the figure 2,
Figure 4 shows a slanted view from front and above of the log sorting mechanism according to figures 2 and 3 and being attached to the bunk in an "on" position,
Figure 5 shows a slanted view from rear and above of a second embodiment of the log sorting mechanism,
Figure 6 shows a side view of the log sorting mechanism according to a third embodiment,
Figure 7 shows a front view of the log sorting mechanism according to a fourth embodiment, and
Figure 8 shows a front view of the log sorting mechanism according to a fifth embodiment.

### Detailed Description of some Preferred Embodiments

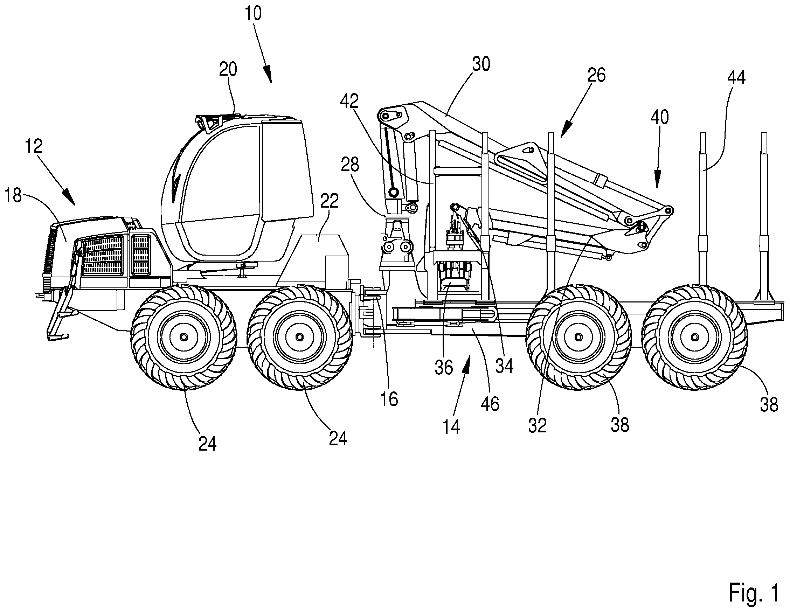

Figure 1 shows a forwarder 10 used for transporting logs from cutting areas in a forest to collecting sites from where the logs are transported (usually by using trucks) to the plants using timber for further processing. The forwarder 10 of figure 1 comprises a front frame 12 and a rear frame 14 being articulated to each other with respect to a vertical axis by means of a frame joint 16.

The front frame 12 comprises a drive and transmission unit 18 as well as an operator's cabin 20 comprising among others a control system 22 for controlling the operations carried out by the forwarder 10. The front frame 12 further comprises front wheels 24.

At the front part of the rear frame 14 there is a boom construction 26 which is attached rotatably with respect to a vertical axis to the rear frame 14 by means of a turntable 28. The boom construction 26 is in this case a boom construction, known as such, and frequently used in forwarders. The boom construction 26 comprises a lift boom 30, a transfer boom 32 and an extension boom 34 wherein the first end of the lift boom 30 is rotatably attached to the turntable 28 and the transfer boom 32 is rotatably attached at it's first end to the second end of the lift boom 30, as well as wherein the extension boom 34 is arranged to extend and retract telescopically out and in from the second end of the transfer boom 32. At the end of the extension boom 34 (i.e. at the tip of the boom construction 26) there is an implement 36 being rotatably attached by means of a rotator to the tip of the boom construction 26. The implement 36 is in this case a grapple designed for loading and unloading timber such as logs.

The rear frame 14 is carried by rear wheels 38 which are driven by the drive and transmission unit 18 of the forwarder 10. Extending rearwards from the turntable 28 is a load space 40 in to which the timber to be transferred by the forwarder 10 is loaded. The load space 40 is limited at the front by a screen 42 and at its sides by bunks 44. Thus, the screen 42 prevents the timber from moving forward against the turntable 28 and the bunks 44 hold the timber so that it cannot spread sideways from the load space 40.

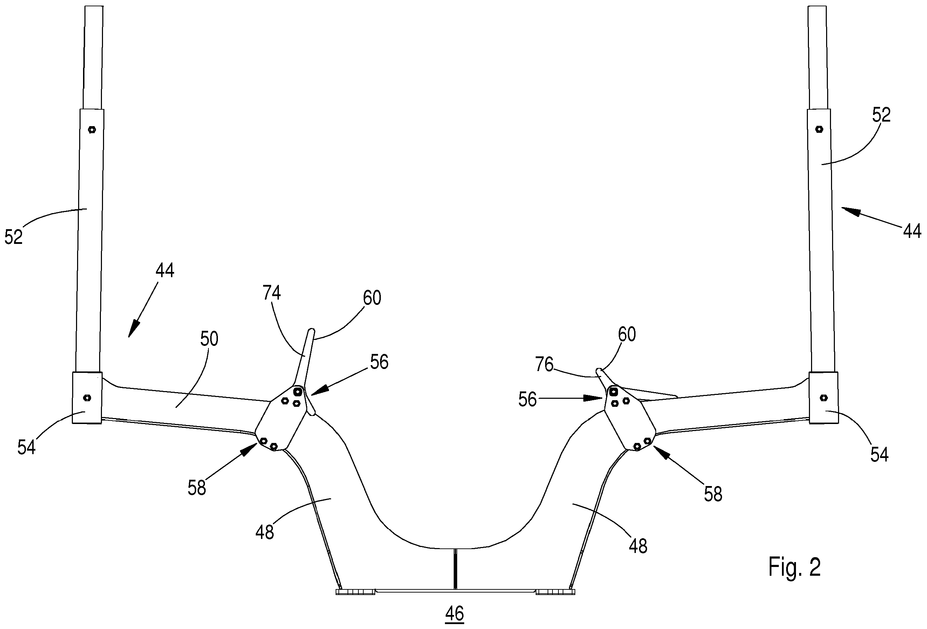

As shown in the figure 2 the bunks 44 of the load space 40 extend from a beam construction 46 of the rear frame 14 sideways such that there is at first a step-like portion 48, then a sideways extending horizontal portion 50 and finally an upwardly extending vertical stakes 52 which in this case is formed of pole-like posts attached detachably to sleeves 54 at the end of the horizontal portions 50. The stakes 52 may or may not be considered part of the bunks 44.

The step-like portion 48 and the horizontal portion 50 are, in this case, made of one common steel plate structure having mainly rectangular cross section. To each bunk 44 shown in figure 2 a log sorting mechanism 56 has been attached. Each log sorting mechanism 56 comprises a one or several part structure 58 and a lever 60 pivotally attached to the part structure 58 such that lever 60 can be turned from an "off' position (i.e. an position wherein a shorter portion 76 of the lever 60 extends obliquely upward and inward direction from the lever's pivot point 65 and wherein a longer portion 74 abuts against the upper side of the bunk 44) to "on" position. When the lever 60 is in the "on" position (i.e. in a position where the longer portion 74 extends in the upward direction from the lever's pivot point 65 and the shorter portion 76 abuts against the upper side of the bunk 44) it provides a space divider that can be used to divide the load space in partitions to which different types of logs can be loaded such that mixing of the first type of logs with the second type of logs can be avoided. For instance, in this case three partitions can be formed when the levers 60 of the log sorting mechanisms 56 of the each bunk 44 are set in "on" position. In figure 2 the lever 60 of log sorting mechanism 56 at the left side bunk 44 is in an "on" position and the lever 60 of the log sorting mechanism at the ride side bunk 44 is in the "off" position. Typically, at least four log sorting mechanisms 56 are attached to one load space (i.e. to the two pairs of bunks) in order to support each log from two positions.

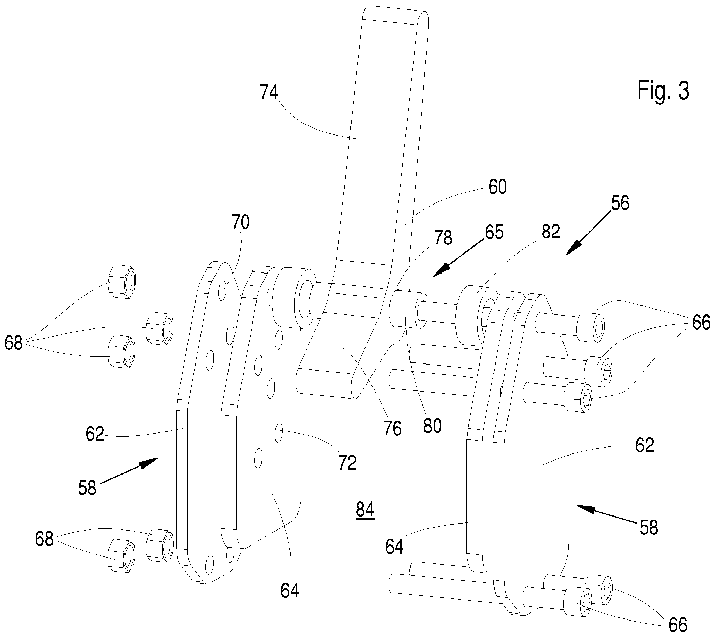

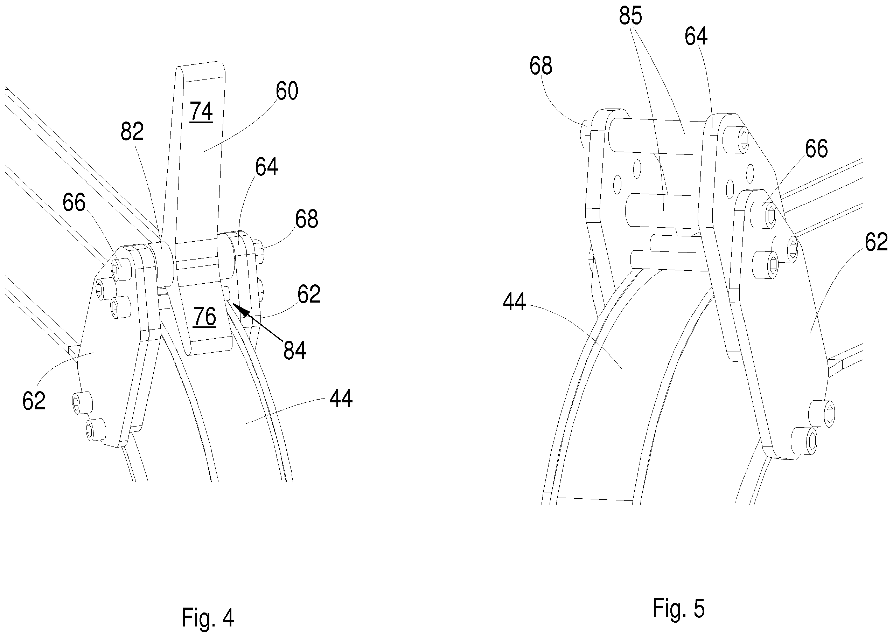

Figure 3 shows an exploded view of the log sorting mechanism 56 shown in the figure 2. As can be seen from figure 3 the part structure 58 comprises in this case plate-like outer side pieces 62 and inner side pieces 64 as well as five bolts 66 with nuts 68. There are also holes 70 in the outer side pieces 62 and holes 72 in the inner side pieces 64. The upper three holes 70 in the outer side pieces 62 are configured in a triangular configuration such that these can be aligned with each of the two groups of holes 72 in the inner side pieces 64 each configured in a similar triangular configuration. Thus, the inner side pieces 64 can be attached by the bolts 66 to the inner side of the outer side pieces 62 in two different positions i.e. in a retracted position and in an extended position. In the retracted position the inner side pieces 64 are positioned with respect to outer side pieces 62 as shown in figure 3 and 4 i.e. such that the upper edges of the outer side pieces 62 and inner side pieces 64 are aligned and the upper three bolts 66 are fitted through the upper triangular group of holes 72 in the inner side pieces 64. In the extended position the inner side pieces 64 are positioned with respect to outer side pieces 62 as shown in figure 5 i.e. such that the upper edges of the inner side pieces 64 extend outside the upper edges of the outer side pieces 62 and the upper three bolts 66 are fitted through the lower triangular group of holes 72 in the inner side pieces 64. Therefore, the configuration of holes 72 in the inner side pieces 64 creates an opportunity to adjust the height of the part structure 58 and hence inner side pieces 64 forming an adjustable intermediate part between the lever 60 and the outer side pieces 62 forming a fixing part by means of which the log sorting mechanism 56 is attached to a bunk 44. It is obvious, that the number of holes 72 and bolts 66 as well as their arrangement is not limited to the way described above. It may be more or less bolts and the arrangement maybe of a square or round shape instead of triangular or it may be irregular at all.

It is further obvious, that the use of inner and outer side pieces 64 and 62 is an advantage, rather than mandatory. A single side piece on each side of the bunk would be sufficient to create a space 84 between themselves to receive a bunk 44 and be clamped to it in any of many positions. Single side pieces can be of different shapes and used upside down to provide different locations for the pivot point 65 depending on the height of the bunk 44.

The single or multiple side pieces may be straight or offset, such that they create a shoulder, which can rest on a lower or upper edge of the bunk 44, thus providing a form fit, rather than a friction fit between the log sorting mechanism 56 and the bunk 44.

Between the side pieces the lever 60 is journalled pivotally above the space 84 and bunk 44 and the short or long portion 76 or 74 can rest against its surface, whereas it is sufficient if the short portion 76 can abut the bunk 44. This overlapping arrangement of the short portion 76 and the space 84, in which the bunk 44 resides results in a direct flow of force lines without torsion forces as they are found in the prior art.

The attachment of the lever 60 to the part structure 58 is accomplished in this embodiment by means of the bolt 66 being the uppermost of said three upper bolts 66 in triangular configuration. As can be seen from the figure 3 the lever 60 has a pivot point 65 between its portions 76, 74 or ends such that said longer portion 74 of the lever and shorter portion 76 of the lever 60 is formed on each side of the pivot point 65. The longer portion 74 and shorter portion 76 are configured such that these form a shallow angle with respect to each other. In this case this angle has been designed such that when the log sorting mechanism 56 is in the "on" position the free end of the longer portion 74 is directed upwards, in case when the log sorting mechanism 56 is attached to the bunk 44 at the location shown in figure 2.

At the pivot point 65, the lever 60 includes a hole 78 through which a central bushing 80 has been fitted. The width of the central bushing 80 is greater than the width of the lever 60 and hence the central bushing 80 extends outside the lever 60 in both sides of the lever 60. The hole in the central bushing 80 has an inner diameter being equal to the outer diameter of the bolt 66 such that bolt 66 can be fitted through the central bushing 80. The dimensions of the central bushing 80 have been configured such that central bushing 80 forms a slide bearing between the lever 60 and the bolt 66 allowing the lever 60 to rotate with respect to the longitudinal axis of the bolt 66. On both sides of the lever 60 there is a side sleeve 82. The purpose of the side sleeves 82 is to hold the lever 60 in a mid-position between the inner side pieces 64 of the part structure 58. The width of the side sleeves 82 has been chosen such that some clearance between the inner side of the inner side pieces 64 and the outer side of the side sleeves 82 is still left even if the inner side pieces 64 are pressed against the outer sides of the central bushing 80 i.e. the central bushing 80 has been configured such that it is wider than the sum of the widths of the lever 60 and both side sleeves 82.

The shape of the lever 60, i.e. the angle between the portions 74 and 76 and the lengths of them and the location of the pivot point 65 are chosen such, that when the log sorting mechanism 56 is moved from one position to the other, the center of gravity of the lever 60 moves from one side of the pivot point 65 to the other as well and holds the lever 60 in the chosen position. As can be seen in figure 4 and on the left side in figure 2, the shorter portion 76 rests on the upper side of the bunk 44 and the longer portion 74 pivoted beyond the pivot point 65, which will keep the lever 60 in the "on" position. The choice of the pivot point 65 may also depend on the intended location of the log sorting mechanism 56 on the bunk 44, because of the steepness of the portions 48 and 50.

The bolts 66 and the nuts 68 form a clamping means by means of which the log sorting mechanism 56 is attached on the part of a bunk 44 which is fitted in the space 84 formed between the inner side pieces 64 of the part structure 58. In this embodiment, the range of the adjustment in the width direction is limited by the length of the bolts 66 and the length of the central bushing 80. The width of side sleeves 82 can be chosen as described above. The size of all of these parts can be easily chosen such that the said space 84 can receive all standard bunks having different widths.

When using the log sorting mechanism 56 according to figure 3 the log sorting mechanism 56 can be attached to the bunk 44, for example as it is shown in figure 4. In figure 4, the log sorting mechanism 56 is attached to the point of the bunk 44 that is located between the step-like portion 48 and the horizontal portion 50 of the bunk 44. In this case the upper three bolts 66 are fitted through the lower group of holes 70 and 72 being in triangular configuration i.e. the inner side pieces 64 are in the retracted position. When attaching the part structure 58 on the bunk 44 the upper three bolts 66 are fitted through the holes 70 and 72. The central bushing 80, lever 60 and the side sleeves 82 can also be assembled to the part structure before fitting the log sorting mechanism 56 on the bunk 44. After this, the log sorting mechanism 56 is fitted on the bunk 44 such that the outer side pieces 62 and the inner side pieces 64 become on the each side of the bunk 44. Next, the lower two bolts 66 are fitted through the holes 70 on the lower end of the outer side pieces 62 such that they remain underneath the lower side of the bunk 44. Finally, the log sorting mechanism 56 is clamped to the desired position with respect of the bunk 44 by screwing the bolts 66 and/or nuts 68 such that the outer side pieces 62 and the inner side pieces 64 of the part structure 58 are moved towards each other and pressed against the side surfaces of the bunk 44.

Figure 5 shows an another way to use the log sorting mechanism 56 according to figures 2 to 4. In this configuration the lever 60, central bushing 80 and the side sleeves 82 have been replaced with a support sleeve 85 having a suitable width that it allows to adjust to the width of the space 84 such that a bunk 44 can be clamped in the space 84 in the part structure 56. In this case, the inner side pieces 64 have been assembled to the extended position and an additional bolt 66 with an another support sleeve 85 through the uppermost hole of the three upper holes 70 of the inner side pieces 64 has been assembled. Thus, in this second embodiment the part structure 58 forms a log sorting mechanism 56 without the lever 60. However, it is also possible to replace the support sleeve 85 of the uppermost bolt 66 with a lever having suitable lengths of shorter and longer portions such that it can be set in "on" and "off" positions similarly as the lever 60 in case of the first embodiment. This advantageous use of inner and outer pieces 64 and 62 being adjustable with respect to each other in a direction upwards from the bunks 44 without the lever 60 forms an independent invention.

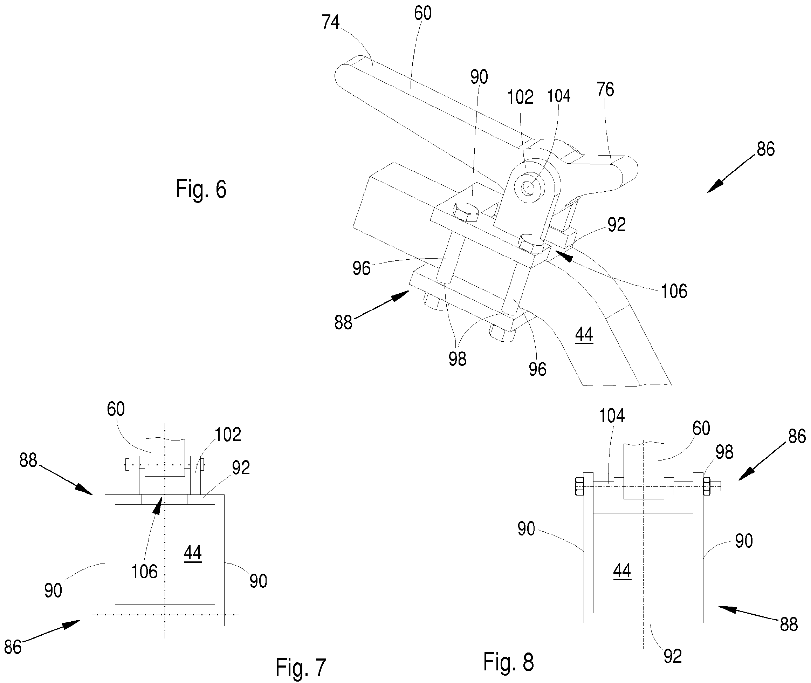

Figure 6 shows a third embodiment of the log sorting mechanism 56.. This embodiment differs more from the log sorting mechanism 56 of the first embodiment than the embodiment shown in figure 5. In this case the part structure 86 comprises an U-shaped fixing part 88 having two flanges 90 protruding outwards from a web 92 and forming a space 84 capable of receiving a bunk 44 in between the flanges 90. This part structure 86 can be clamped around a bunk 44 by means of e.g. two bolts 96 fitted through holes 98 provided in the vicinity of the outer ends of the flanges 90. When assembled on a bunk 44, the fixing part 88 is fitted on the bunk 44 from the side of the bunk 44 such that one of the flanges 90 becomes on the upper side of the bunk 44 and another on the lower side of the bunk 44. The web 92 is placed against the front or rear side of the bunk 44. As shown in figure 6, the lever 60 has been articulated on the outer side of one of the flanges 90 by means of two brackets 102 and a shaft 104 (that can be e.g. a bolt) on the outer side of one of the flanges 90. This articulation comprises further bearing means such as e.g. the central bushing 80 and side sleeves 82 of the first embodiment and allows rotating the lever 60 to respective "on" and "off" positions as the case is with the first embodiment shown in figures 2 to 4. The respective flange 90 has a recess 106, which exposes the short portion 76 of the lever 60 to the upper side of the bunk 44, such that it is in an overlapping relationship with it and can rest on it in the "on" position.

Figure 7 shows a fourth embodiment of the log sorting mechanism 56. This embodiment is similar to the third embodiment shown in figure 6 except that the brackets 102 and the lever 60 have been placed on the outer side of the web 92 of the U-shaped fixing part 88 and that the fixing part 88 is fitted on the bunk 44 from above. In this case the web 92 has a recess through which the short portion 76 may move to abut the upper side of the bunk 44.

Figure 8 shows a fifth embodiment of the log sorting mechanism 56. Also in this case, the part structure 86 comprises the U-shaped fixing part 88 similar to the third and the fourth embodiment shown in figures 6 and 7. In this embodiment the lever 60 has been articulated by a shaft 104 (that can be e.g. a bolt similar to bolts 96 in figure 6) fitted through a hole 98 at the vicinity of the ends of the flanges 90. Hence, in this embodiment the fixing part 88 is fitted on the bunk 44 from below and the lever 60 is attached to the fixing part 88 after the fixing part 88 has been fitted on the bunk 44.

The log sorting mechanism according to the invention is not limited to the embodiments described above but can vary within the scope of the appended claims.

## Claims

1. Log sorting mechanism (56) comprising:
- a one or several part structure (58; 88) provided with a space (84) capable of receiving a part of a bunk (44),
- clamping means (66, 68; 96) connecting the part structure (58; 86) to the bunk (44), **characterized in that** the log sorting mechanism comprises a lever (60) being pivotably attached between its ends to the part structure (58; 88) with at least one end of the lever (60) being located in an overlapping arrangement with said space (84).

2. Log sorting mechanism (56) according to claim 1 wherein the part structure (58; 86) comprises at least one fixing part (62; 88) to which the lever (60) has been attached.

3. Log sorting mechanism according to claim 1 or 2 wherein the clamping means (66, 68; 96) comprise adjustable elongate elements (66; 96), such as screws or bolts, fitted through a holes or apertures (70, 72) in the part structure (58).

4. Log sorting mechanism according to claim 3 wherein one of the elongate elements (66; 96) form a shaft to which the lever (60) has been pivotally attached by a bearing means (80, 82).

5. Log sorting mechanism according to claim 2 wherein the part structure (58) comprises at least one intermediate part (64) being between the fixing part (62) and the lever (60).

6. Log sorting mechanism according to claim 5 wherein the fixing part (62) comprises outer side pieces (62) and the intermediate part (64) comprises inner side pieces (64).

7. Log sorting mechanism according to claim 6 wherein the inner side pieces (64) are attached to the outer side pieces (62) such that the position of the inner side piece (64) is changeable with respect of the outer side piece (62).

8. Log sorting mechanism according to claim 6 or 7 wherein the inner side pieces (64) comprise a first group of holes (72) and a second group of holes (72) such that the outer side pieces (62) can be attached in the retracted position by aligning the first group of holes (72) of the inner side pieces (64) with the holes (70) of the outer side pieces (62) and to the extended position by aligning the second group of holes (72) of the inner side pieces (64) with the holes (70) of the outer side pieces (62).

9. Log sorting mechanism according to claim 8 wherein the clamping means (66, 68) is arranged to adjust the width of the said space (84) between the side pieces (62, 64).

10. Log sorting mechanism according claim 9 wherein the lever (60) is attached pivotally between the inner side pieces (64).

11. Log sorting mechanism according to any of claims 1 to 5 wherein the part structure comprises a U-shaped fixing part (88) having a web (92) and two flanges (90).

12. Log sorting mechanism according to claim 11 wherein clamping means (96) comprise at least one elongate adjustable element (96) arranged to compress the flanges (90) of the U-shaped fixing part (88) in order to adjust the said space (84) formed between the flanges (90).

13. Log sorting mechanism according to claim 11 or 12 wherein the lever (60) has been pivotally attached to a shaft (104) being placed between the flanges (90) of the U-shaped fixing part (88).

14. Log sorting mechanism according to claim 13 wherein the U-shaped fixing part (88) comprises brackets (102) to which the lever (60) has been pivotally attached by means of a shaft (104) and a bearing means.

15. Log sorting mechanism according to claim 14 wherein the brackets (102) are fixed on the outer side of one of the flanges (90) or the web (92) of the U-shaped fixing part (88).

## Patentansprüche

1. Baumstämmesortierungsmechanismus (56), Folgendes umfassend:
- eine ein- oder mehrteilige Teilestruktur (58; 88), die mit einem Zwischenraum (84) versehen ist, der dazu funktionsfähig ist, einen Teil eines Querbaums (44) aufzunehmen,
- ein Einspannmittel (66, 68; 96), die die Teilestruktur (58; 86) mit dem Querbaum (44) verbindet, **dadurch gekennzeichnet, dass** der Baumstämmesortierungsmechanismus einen Hebel (60) umfasst, der verschwenkbar zwischen seinen Enden an der Teilestruktur (58; 88) befestigt ist, wobei mindestens ein Ende des Hebels (60) den Zwischenraum (84) überlagernd angeordnet ist.

2. Baumstämmesortierungsmechanismus (56) nach Anspruch 1, wobei die Teilestruktur (58; 86) mindestens einen Fixierungsteil (62; 88) umfasst, an dem der Hebel (60) befestigt ist.

3. Baumstämmesortierungsmechanismus nach Anspruch 1 oder 2, wobei das Einspannmittel (66; 68; 96) anpassbare längliche Elemente (66; 96) umfasst, zum Beispiel Schrauben oder Bolzen, die durch Bohrungen oder Öffnungen (70, 72) in der Teilestruktur (58) eingesetzt sind.

4. Baumstämmesortierungsmechanismus nach Anspruch 3, wobei eins der länglichen Elemente (66; 96) eine Welle ausbildet, an der der Hebel (60) über eine Lagereinrichtung (80, 82) verschwenkbar befestigt wurde.

5. Baumstämmesortierungsmechanismus nach Anspruch 2, wobei die Teilestruktur (58) mindestens einen Zwischenteil (64) umfasst, der sich zwischen dem Fixierungsteil (62) und dem Hebel (60) befindet.

6. Baumstämmesortierungsmechanismus nach Anspruch 5, wobei der Fixierungsteil (62) Außenseitenteile (62) umfasst und der Zwischenteil (64) Innenseitenteile (64) umfasst.

7. Baumstämmesortierungsmechanismus nach Anspruch 6, wobei die Innenseitenteile (64) derart an den Außenseitenteilen (62) befestigt sind, dass die Position der Innenseitenteile (64) in Bezug zu den Außenseitenteilen (62) veränderbar ist.

8. Baumstämmesortierungsmechanismus nach Anspruch 6 oder 7, wobei die Innenseitenteile (64) eine erste Gruppe von Bohrungen (72) und eine zweite Gruppe von Bohrungen (72) umfassen, sodass die Außenseitenteile (62) in der eingefahrenen Stellung befestigt werden können, indem die erste Gruppe von Bohrungen (72) der Innenseitenteile (64) mit den Bohrungen (70) der Außenseitenteile (62) ausgerichtet werden, und in der ausgefahrenen Stellung befestigt werden können, indem die zweite Gruppe Bohrungen (72) der Innenseitenteile (64) mit den Bohrungen (70) der Außenseitenteile (62) ausgerichtet werden.

9. Baumstämmesortierungsmechanismus nach Anspruch 8, wobei das Einspannmittel (66, 68) dazu angeordnet ist, die Breite des Zwischenraums (84) zwischen den Seitenteilen (62, 64) anzupassen.

10. Baumstämmesortierungsmechanismus nach Anspruch 9, wobei der Hebel (60) verschwenkbar zwischen den Innenseitenteilen (64) befestigt ist.

11. Baumstämmesortierungsmechanismus nach einem der Ansprüche 1 bis 5, wobei die Teilestruktur einen U-förmigen Fixierungsteil (88) umfasst, der einen Steg (92) und zwei Flansche (90) aufweist.

12. Baumstämmesortierungsmechanismus nach Anspruch 11, wobei das Einspannmittel (96) mindestens ein längliches anpassbares Element (96) umfasst, das dazu angeordnet ist, die Flansche (90) des U-förmigen Fixierungsteils (88) zusammenzudrücken, um den zwischen den Flanschen (90) ausgebildeten Zwischenraum (84) anzupassen.

13. Baumstämmesortierungsmechanismus nach Anspruch 11 oder 12, wobei der Hebel (60) verschwenkbar an einer Welle (104) befestigt ist, die zwischen den Flanschen (90) des U-förmigen Fixierungsteils (88) angeordnet ist.

14. Baumstämmesortierungsmechanismus nach Anspruch 13, wobei der U-förmige Fixierungsteil (88) Halterungen (102) umfasst, an denen der Hebel (60) mittels einer Welle (104) und eines Lagermittel verschwenkbar befestigt wurde.

15. Baumstämmesortierungsmechanismus nach Anspruch 14, wobei die Halterungen (102) an der Außenseite der Flansche (90) oder des Stegs (92) des U-förmigen Fixierungsteils (88) befestigt sind.

## Revendications

1. Mécanisme de tri de billes de bois (56), comprenant :
- une ou plusieurs structures de partie (58 ; 88) pourvue d'un espace (84) capable de recevoir une partie d'un berceau (44),
- des moyens de serrage (66, 68 ; 96) raccordant la structure de partie (58 ; 86) au berceau (44), **caractérisé en ce que** le mécanisme de tri de billes de bois comprend
un levier (60) attaché de façon pivotante entre ses extrémités à la structure de partie (58 ; 88) avec au moins une extrémité du levier (60) située dans un agencement de chevauchement avec ledit espace (84).

2. Mécanisme de tri de billes de bois (56) selon la revendication 1, dans lequel la structure de partie (58 ; 86) comprend au moins une partie de fixation (62 ; 88) à laquelle le levier (60) a été attaché.

3. Mécanisme de tri de billes de bois selon la revendication 1 ou 2, dans lequel les moyens de serrage (66, 68 ; 96) comprennent des éléments allongés ajustables (66 ; 96), tels que des vis ou des boulons, installés à travers des trous ou des ouvertures (70, 72) dans la structure de partie (58).

4. Mécanisme de tri de billes de bois selon la revendication 3, dans lequel un des éléments allongés (66 ; 96) forme un arbre auquel le levier (60) a été attaché de façon pivotante par un moyen à palier (80, 82) .

5. Mécanisme de tri de billes de bois selon la revendication 2, dans lequel la structure de partie (58) comprend au moins une partie intermédiaire (64) entre la partie de fixation (62) et le levier (60).

6. Mécanisme de tri de billes de bois selon la revendication 5, dans lequel la partie de fixation (62) comprend des pièces latérales extérieures (62) et la partie intermédiaire (64) comprend des pièces latérales intérieures (64).

7. Mécanisme de tri de billes de bois selon la revendication 6, dans lequel les pièces latérales intérieures (64) sont attachées aux pièces latérales extérieures (62) de telle sorte que la position de la pièce latérale intérieure (64) soit changeable par rapport à la pièce latérale extérieure (62).

8. Mécanisme de tri de billes de bois selon la revendication 6 ou 7, dans lequel les pièces latérales intérieures (64) comprennent un premier groupe de trous (72) et un second groupe de trous (72) de telle sorte que les pièces latérales extérieures (62) puissent être attachées dans la position rétractée en alignant le premier groupe de trous (72) des pièces latérales intérieures (64) avec les trous (70) des pièces latérales extérieures (62) et dans la position étendue en alignant le second groupe de trous (72) des pièces latérales intérieures (64) avec les trous (70) des pièces latérales extérieures (62).

9. Mécanisme de tri de billes de bois selon la revendication 8, dans lequel les moyens de serrage (66, 68) sont agencés pour ajuster la largeur dudit espace (84) entre les pièces latérales (62, 64).

10. Mécanisme de tri de billes de bois selon la revendication 9, dans lequel le levier (60) est attaché de façon pivotante entre les pièces latérales intérieures (64).

11. Mécanisme de tri de billes de bois selon l'une quelconque des revendications 1 à 5, dans lequel la structure de partie comprend une partie de fixation en forme de U (88) ayant une âme (92) et deux ailes (90).

12. Mécanisme de tri de billes de bois selon la revendication 11, dans lequel les moyens de serrage (96) comprennent au moins un élément ajustable allongé (96) agencé pour comprimer les ailes (90) de la partie de fixation en forme de U (88) afin d'ajuster ledit espace (84) formé entre les ailes (90).

13. Mécanisme de tri de billes de bois selon la revendication 11 ou 12, dans lequel le levier (60) a été attaché de façon pivotante à un arbre (104) placé entre les ailes (90) de la partie de fixation en forme de U (88).

14. Mécanisme de tri de billes de bois selon la revendication 13, dans lequel la partie de fixation en forme de U (88) comprend des supports (102) auxquels le levier (60) a été attaché de façon pivotante au moyen d'un arbre (104) et d'un moyen à palier.

15. Mécanisme de tri de billes de bois selon la revendication 14, dans lequel les supports (102) sont fixés sur le côté extérieur d'une des ailes (90) ou de l'âme (92) de la partie de fixation en forme de U (88).
